# FASCICULE DE BREVET EUROPEEN

(11) **EP 2 802 435 B1**
(45) Date de publication et mention de la délivrance du brevet: **04.09.2019**
(21) Numéro de dépôt: 12810347.0
(22) Date de dépôt: 05.12.2012
(51) Int. Cl.: B23K 9/23, B23K 35/38, B23K 9/28, B23K 9/167, B23K 9/173

(54) **DISPOSITIF DE SOUDAGE HYBRIDE MIG-TIG OU MAG-TIG**
MIG/WIG ODER MAG/WIG HYBRID-SCHWEISSVORRICHTUNG
MIG/TIG OR MAG/TIG HYBRID WELDING DEVICE

(30) Priorité: 11.01.2012 FR 1250270
(43) Date de publication de la demande: 19.11.2014
(73) Titulaire: Lincoln Electric France SAS, 76120 Le Gand Quevilly (FR)
(72) Inventeur: BURVELLE, Nicolas, 92600 Asnières sur Seine (FR); PLANCKAERT, Jean-Pierre, F-60240 Monneville (FR)
(74) Mandataire: Grosse Schumacher Knauer von Hirschhausen
(86) Numéro de dépôt international: PCT/FR2012/052808
(87) Numéro de publication internationale: WO 2013/104839

(56) Documents cités:
- DE-A1- 2 426 017
- DE-U- 1 941 393
- US-A- 3 549 857
- US-A1- 2007 007 264
- US-B2- 6 693 252

## Description

L'invention porte sur un dispositif de soudage associant une torche MIG ou MAG et une torche TIG et permettant une mise en oeuvre plus simple et plus rapide d'un procédé de soudage hybride MIG-TIG ou MAG-TIG. L'invention concerne également un procédé de soudage hybride MIG-TIG ou MAG-TIG de pièces métalliques utilisant le dispositif de soudage de l'invention, en particulier un procédé de soudage à grande vitesse de pièces métalliques de faibles épaisseurs.

Les procédés de soudage MIG, pour *« Métal Inert Gas* », ou MAG, pour *« Métal Active Gas* » reposent sur l'utilisation d'un arc électrique établi entre l'extrémité d'un fil métallique fusible et les pièces métalliques à souder. La chaleur de l'arc électrique permet de fondre le métal constitutif des pièces à souder ainsi que le métal constitutif du fil fusible, i. e le métal d'apport, ce qui génère un bain de soudure, c'est-à-dire un bain de métal liquide, formé du métal des pièces à souder et du métal du fil fusible fondu et transféré dans l'arc électrique.

On obtient un cordon de soudure par re-solidification progressive du bain de soudure et déplacement relatif du fil fusible et des pièces métalliques. En outre, un flux de gaz inerte est distribué sur le bain de soudure par une buse positionnée au-dessus des pièces à souder de manière à protéger le métal fondu de l'air ambiant.

Au cours de l'opération de soudage MIG ou MAG, un flux de gaz de protection est distribué sur le bain de soudure par une buse positionnée au-dessus des pièces à souder, de manière à protéger le métal fondu de l'air ambiant.

La différence entre les procédés de soudage MIG ou MAG réside dans la nature du gaz de protection utilisé, à savoir inerte dans le cas du procédé MIG et active, plus précisément oxydante, dans le cas du procédé MAG.

Le procédé de soudage MIG ou MAG est généralement opéré avec une torche de soudage MIG ou MAG supportant le fil métallique servant d'électrode fusible et la buse apte à distribuer le gaz de protection du bain de soudure. La torche MIG ou MAG est reliée électriquement à au moins un générateur de courant délivrant un courant lisse ou pulsé, d'une intensité de l'ordre de 100 à 500 A, laquelle torche est également reliée fluidiquement à au moins une source de gaz inerte. L'ensemble de ces éléments, à savoir torche de soudage, générateur de courant, source de gaz, ainsi que les cables d'alimentations électriques, les circuits d'alimentation en gaz et les éléments mécaniques tels que bâti-supports et/ou poutre mobile sur lesquels est agencée la torche sont compris dans un ensemble appelé installation de soudage MIG ou MAG.

Habituellement, le procédé de soudage MIG ou MAG est utilisé pour souder des pièces métalliques formées de différents matériaux métalliques, notamment des pièces en alliages ferreux, en aluminium ou an alliage d'aluminium, de préférence en acier inoxydable ou en acier au carbone.

A noter que par pièces métalliques, on entend au moins deux pièces métalliques distinctes ou alors une seule pièce à souder avec elle-même, par exemple les deux bords longitudinaux d'une feuille métallique de manière à former un tube soudé.

Outre le temps de préparation des pièces avant soudage et le taux de cordons de soudure mis au rebut, la productivité d'un procédé de soudage MIG ou MAG est gouvernée en grande partie par la vitesse de soudage des pièces métalliques.

Afin d'augmenter la productivité du procédé de soudage MIG ou MAG, une solution évidente est donc d'augmenter la vitesse de soudage, c'est-à-dire la vitesse de déplacement relatif du fil fusible et des pièces métalliques à souder.

Toutefois, il s'avère dans certains cas que les vitesses de soudage MIG ou MAG ne peuvent pas être augmentées au-delà d'une valeur limite, à laquelle des défauts commencent à apparaître sur les cordons de soudure. En particulier, on observe l'apparition de ces défauts lors du soudage de pièces métalliques de faibles épaisseurs, typiquement moins de 2 mm, ou dit autrement de tôles minces, pour lesquelles les vitesses de soudage sont relativement élevées, généralement entre 1.5 et 2 m/min.

Un défaut couramment observé se traduit par un changement de la morphologie du cordon de soudure obtenu par soudage MIG ou MAG et porte le nom de « *humping* ». Il se traduit par l'apparition d'oscillations périodiques, ou dit autrement de bosses, à la surface du cordon de soudure et conduit à deux types de morphologie de cordon : la morphologie à région creusée ou « *gouging région morphology* » (GRM) et la morphologie dite de cylindre perlé ou *« beaded cylinder morphology* » (BCM).

Les mécanismes conduisant à l'apparition du « *humping* » sont complexes et font intervenir la mécanique des fluides, la thermique et la physique de l'arc électrique utilisé en soudage MIG ou MAG. Par exemple, l'apparition du défaut BCM est liée à un mauvais mouillage qui génère une instabilité de pincement analogue à celle présentée dans la théorie de Rayleigh. En fait, le défaut GRM apparaît parce que le bain de soudure est chassé vers l'arrière de l'arc de soudage de façon très importante en raison des contraintes qui s'exercent. Ces contraintes résultent de la quantité de mouvement des gouttes de métal du fil fusible transférées dans l'arc électrique et de la pression magnétique exercée par l'arc électrique.

De manière générale, le défaut de « *humping* » apparaît aux grandes vitesses de soudage du fait de l'élongation du bain de soudure, le fin film de métal liquide situé sous l'arc électrique et à l'arrière de celui-ci devenant vulnérable à une solidification anticipée sous la forme d'une surépaisseur de métal de bosses. Ce phénomène répété périodiquement va donner naissance à une succession de creux et de bosses à la surface du cordon de soudure.

Le défaut de « *humping* » est bien connu et notamment décrit dans les documents suivants :
- T.C. Nguyen et al, The humping phenomenon during high speed gas metal arc welding, Science and technology of welding and joining, 2005, vol. 10, n° 4, pp. 447-459,
- M.H. Cho and D.F. Farson, Understanding bead hump formation in gas metal arc welding using a numerical simulation, Metallurgical and materials transactions B, vol. 38B, pp. 305-319,
- T.C. Nguyen, D.C. Weckman and D.A. Johnson, The discontinuous weld bead defect in high-speed gas metal arc welds, Welding Journal, 2007, vol. 86, n° 11, pp. 360-372, et
- H.W. Choi, D.F. Farson and M.H. Cho, Using a hybrid laser plus GMAW processfor controlling the bead humping defect, Welding Journal, 2006, vol. 85, n° 8, pp. 174-179.

Or, le défaut de « *humping* » n'est pas acceptable d'un point de vue industriel, non seulement du fait de l'aspect des cordons de soudure obtenus, mais également du fait de la dégradation des propriétés mécaniques des cordons que cela entraîne.

Il est alors nécessaire de diminuer la vitesse de soudage pour obtenir des cordons de soudure, ce qui nuit à la productivité du procédé de soudage MIG ou MAG et pose donc un problème majeur.

Il existe plusieurs solutions pour résoudre ce problème et augmenter les vitesses de soudage MIG ou MAG, sans que les cordons de soudure ne présente un aspect bosselé, comme par exemple préchauffer les pièces métalliques avant soudage MIG ou MAG ou utiliser deux torches MIG ou MAG synchronisées.

Cependant, toutes ces solutions sont compliquées à mettre en oeuvre, complexifient excessivement l'installation de soudage MIG ou MAG ou conduisent à une augmentation conséquente de l'énergie électrique mise en oeuvre au cours de l'opération de soudage, ce qui nuit également à l'efficacité et à la productivité de l'installation de soudage MIG ou MAG.

Une solution alternative pour augmenter les vitesses de soudage MIG ou MAG, sans que les cordons de soudure ne présente un aspect bosselé, a été proposée précédemment par les inventeurs de la présente invention.

Elle consiste à utiliser un dispositif de soudage formé d'une torche de soudage TIG, pour *« Tungsten Inert Gas* », associée à la torche de soudage MIG ou MAG, c'est-à-dire un dispositif de soudage hybride MIG-TIG ou MAG-TIG. Un arc électrique TIG est établi entre une électrode non fusible en tungstène disposée dans la torche de soudage TIG et les pièces métalliques à souder. La torche TIG est également munie d'une buse délivrant un flux de gaz inerte pour protéger le bain de fusion. L'arc électrique TIG est positionné en poursuite de l'arc électrique MIG ou MAG, c'est-à-dire qu'il est positionné à l'arrière de l'arc électrique MIG ou MAG en suivant la direction de soudage et qu'il se déplace simultanément à celui-ci.

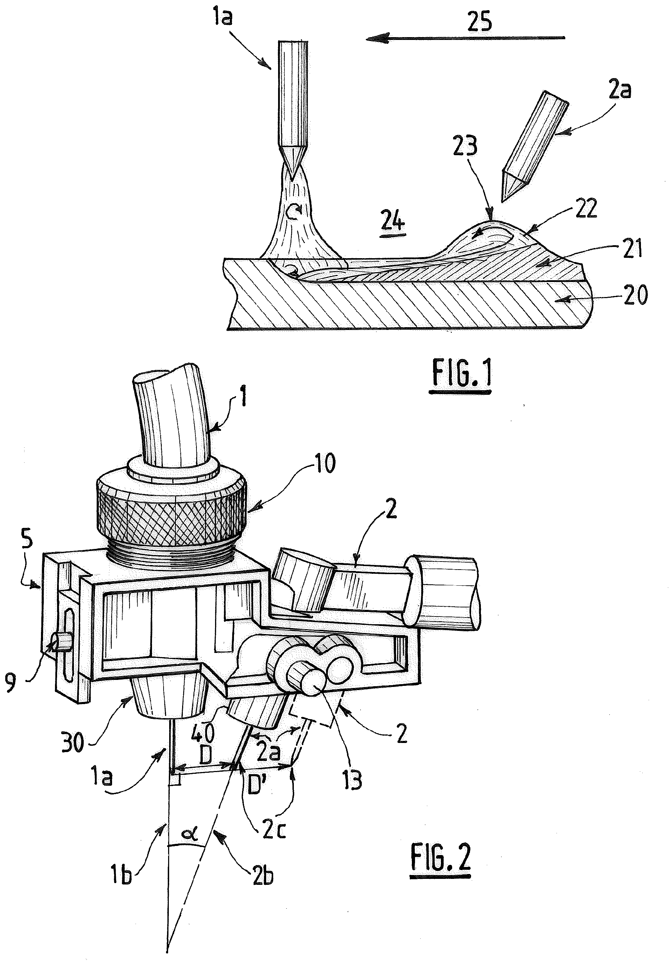

L'effet produit par l'arc TIG au cours du procédé de soudage est illustré sur la Figure 1 ci-annexée. Celle-ci schématise le soudage de pièces métalliques constituées d'un métal de base 20. Le bain de fusion généré par l'apport de chaleur de l'arc électrique MIG ou MAG établi entre le fil fusible la et les pièces métallique à souder se solidifie en partie (en 21) en restant recouvert d'un fin film de métal liquide 22. Un arc électrique TIG, établi entre l'électrode non fusible 2a et les pièces à souder est positionné en poursuite de l'arc MIG ou MAG, selon la direction de soudage 25.

D'une part, cet arc TIG vient fournir un flux de chaleur localisé (en 24) permettant de retarder la solidification anticipée du fin film de métal liquide qui apparaît en poursuite de l'arc électrique MIG ou MAG. D'autre part, l'arc TIG exerce une pression sur la bosse de métal fondu (en 23) qui apparaît à l'extrémité arrière du bain de soudure et conduit à l'apparition du défaut de « *humping ».*

Plus précisément, le fil fusible la de la torche MIG ou MAG est orienté selon une première direction donnée et l'électrode non fusible 2a de la torche de soudage TIG est orientée selon une deuxième direction donnée. Lesdites première et seconde directions sont sensiblement coplanaires et forment un angle typiquement supérieur à 5° et inférieur à 40°. L'extrémité de l'électrode de la torche de soudage TIG est située à une distance de ladite première direction comprise entre 20 et 44 mm.

Ce dispositif de soudage hybride MIG-TIG ou MAG-TIG présente l'avantage de ne pas nécessiter de chauffer une grande partie des pièces à souder. On traite ponctuellement une zone du cordon de soudure peu après sa formation avec un arc TIG, donc la dépense d'énergie supplémentaire liée à l'utilisation de la torche TIG reste modérée.

US-A-6693252 divulgue l'association d'une torche de soudage TIG et d'une torche de soudage MIG, lesdites torches étant assemblées par un dispositif qui les maintient à une distance fixe l'une de l'autre, et par conséquent le préambule de la revendication 1.

US-A-2007/0007264 divulgue un dispositif permettant un mouvement en pivotement d'une torche unique de soudage autour d'un axe fixe.

US-A-3549857 et DE-A-1941393 décrivent respectivement deux torches solidarisées l'une à l'autre et deux torches libres en translation l'une par rapport à l'autre dans la direction de soudage ou en direction de l'axe des torches.

DE-A-2426017 divulgue un dispositif permettant un changement continue de la distance entre deux torches avec une position de début et une position de fin d'une glissière.

En effet, la torche TIG doit être liée mécaniquement à la torche MIG de manière à pouvoir la suivre dans ses mouvements et à fonctionner simultanément avec elle. En outre, le dispositif de soudage hybride MIG-TIG ou MAG-TIG doit comporter des moyens de réglage, tel un ou des vérins, engrenages..., permettant d'ajuster précisément la position relative desdites torches de soudage l'une par rapport à l'autre, c'est-à-dire la distance entre lesdites torches ou entre celles-ci et les pièces à souder, ou encore les différents angles d'inclinaison des torches.

En particulier, selon la nature du matériau des pièces métalliques à souder, il est nécessaire d'adapter la distance séparant l'extrémité de l'électrode de la torche de soudage TIG et la première direction d'orientation du fil fusible de la torche MIG ou MAG.

Par exemple, lorsque les pièces métalliques à souder sont en acier inoxydable, l'extrémité de l'électrode non fusible doit se situer à une distance D donnée de ladite première direction d'orientation du fil fusible. Lorsque les pièces métalliques à souder sont en acier au carbone, l'extrémité de l'électrode non fusible doit se situer à une distance D' donnée de ladite première direction d'orientation du fil fusible, la distance D' étant supérieure à la distance D.

Mais cela impose de réajuster la position relative des torches de soudage TIG et MIG ou MAG l'une par rapport à l'autre à chaque fois que l'on change de matériau pour les pièces métalliques à souder. Il s'ensuit un allongement du temps de préparation du dispositif avant l'opération de soudage et donc une perte de productivité de l'installation de soudage.

Pour remédier à ce problème, une solution est de disposer d'autant de dispositifs de soudage hybride MIG-TIG ou MAG-TIG, en d'autres termes de configurations d'assemblage de torche MIG ou MAG et de torche TIG, que de types de matériau métallique à souder.

Toutefois, cette solution n'est pas idéale car elle augmente le coût global de l'installation de soudage et ne résout pas non plus le problème d'allongement du temps de préparation du dispositif avant l'opération de soudage. En effet, il est alors nécessaire de monter et de démonter le dispositif de soudage hybride MIG-TIG ou MAG-TIG du bâti-support ou de la poutre mobile sur lesquels il est généralement agencé.

Au vu de cela, le problème à résoudre est dès lors de proposer un dispositif de soudage MIG amélioré, c'est-à-dire permettant d'accroitre la vitesse de soudage sans que les cordons de soudure obtenus ne présentent de défaut du type « *humping* », qui ne complexifie pas de manière excessive l'installation de soudage, ne nécessite pas un apport supplémentaire d'énergie trop important, et qui soit en outre de mise en oeuvre aisée et rapide.

Dit autrement, le problème à résoudre est de proposer un dispositif de soudage MIG ou MAG amélioré ne nécessitant pas, ou du moins un nombre grandement limité, de réglages mécaniques avant sa mise en oeuvre, et qui soit apte et conçu pour opérer le soudage de pièces métalliques quelque soit la nature du matériau constitutif desdites pièces.

La solution de l'invention est alors un dispositif de soudage hybride MIG-TIG ou MAG-TIG comprenant une torche de soudage MIG ou MAG comprenant un fil fusible orienté selon une première direction, associée à une torche de soudage TIG comprenant une électrode non fusible orientée selon une deuxième direction, lesdites première et deuxième directions étant sensiblement coplanaires et formant entre elles un angle compris entre 5 et 40°,
caractérisé en ce qu'il comprend en outre un sabot d'assemblage des torches apte à et conçu pour permettre un positionnement de la torche de soudage TIG selon au moins deux positions prédéfinies par rapport à la torche de soudage MIG ou MAG comprenant :
- une première position dans laquelle l'extrémité de l'électrode non fusible se situe à une première distance de la première direction, et
- au moins une deuxième position dans laquelle l'extrémité de l'électrode non fusible se situe à une deuxième distance de la première direction, la deuxième distance étant supérieure à la première distance.
- un logement axial traversant le sabot selon la première direction, dans lequel est agencée la torche de soudage MIG ou MAG, un premier logement latéral traversant le sabot dans lequel est agencée la torche de soudage TIG lorsqu'elle est positionnée dans la première position, et au moins un deuxième logement latéral traversant le sabot dans lequel est agencée la torche de soudage TIG lorsqu'elle est positionnée dans la deuxième position.

Par ailleurs, selon le mode de réalisation considéré, l'invention peut comprendre l'une ou plusieurs des caractéristiques suivantes:
- la première distance est comprise entre 20 et 26 mm.
- la deuxième distance est comprise entre 36 et 44 mm.
- lesdites première et seconde directions forment entre elles un angle compris entre 10° et 30°.
- lesdites première et seconde directions forment un angle compris entre 15° et 25°, de préférence entre 18 et 23°, avantageusement de l'ordre de 20°.
- le sabot comprend en outre des moyens de fixation pour maintenir la torche de soudage TIG dans les premier ou deuxième logements latéraux.
- le sabot comprend en outre des moyens d'ajustement en translation de la position de la torche de soudage MIG ou MAG le long de la première direction.
- le dispositif de soudage hybride comprend en outre une pince agencée dans le logement axial et dans laquelle est insérée la torche de soudage MIG ou MAG.
- le sabot est formé d'un bloc.
- le sabot est en aluminium.

Selon un autre aspect, l'invention concerne également une installation de soudage hybride MIG-TIG ou MAG-TIG comprenant une torche de soudage MIG ou MAG et une torche de soudage TIG reliées électriquement à au moins un générateur de courant et reliées fluidiquement à au moins une source de gaz, caractérisée en ce qu'elle comprend en outre une poutre mobile sur laquelle est agencé un dispositif de soudage hybride MIG-TIG selon l'invention, ledit dispositif de soudage hybride MIG-TIG ou MAG-TIG étant mobile ou non, et une commande numérique apte à et conçue pour contrôler le déplacement de la poutre mobile et/ou du dispositif de soudage hybride MIG-TIG ou MAG-TIG.

En outre, l'invention porte aussi sur un procédé de soudage hybride MIG-TIG ou MAG-TIG de pièces métalliques (30) mettant en oeuvre un dispositif de soudage hybride MIG-TIG ou MAG-TIG selon l'invention et dans lequel, pendant le soudage :
- on établit un arc électrique MIG ou MAG entre le fil fusible (1a) de la torche (1) de soudage MIG ou MAG et les pièces métalliques à souder de manière à générer un bain de soudure, ledit arc électrique MIG ou MAG étant protégé par un flux de gaz contenant majoritairement au moins un composé inerte choisi parmi l'hélium et l'argon, et
- on établit un arc électrique TIG entre l'électrode non fusible (2a) de la torche (2) de soudage TIG et les pièces métalliques à souder sur au moins une partie dudit bain de soudure, ledit arc électrique TIG étant protégé par un flux de gaz contenant essentiellement de l'argon ou un mélange d'hélium et d'argon.

De préférence, le procédé selon l'invention comprend l'une ou plusieurs des caractéristiques suivantes :
- l'arc électrique MIG ou MAG est protégé par un flux de gaz contenant au moins 80% d'au moins un composé inerte choisi parmi l'hélium et l'argon (% en volume).
- le flux de gaz protégeant l'arc électrique MIG ou MAG contient en outre un composé minoritaire à caractère chimique oxydant choisi parmi CO₂ et O₂.
- lorsque les pièces soudées sont en acier inoxydable, le flux de gaz protégeant l'arc électrique MIG ou MAG contient environ 98% d'argon et 2% de CO₂ (% en volume).
- lorsque les pièces soudées sont formées d'acier au carbone, le flux de gaz protégeant l'arc électrique MIG ou MAG contient environ 92% d'argon et 8% de CO₂ ou 82% d'argon et 18% de CO₂ (% en volume).
- le flux de gaz protégeant l'arc électrique TIG contient essentiellement de l'argon, de préférence au moins 99.9% d'argon (% en volume).
- le flux de gaz protégeant l'arc électrique TIG contient au moins 95% d'argon et de l'hydrogène (% en volume).
- le flux de gaz protégeant l'arc électrique TIG contient un mélange d'hélium et d'argon.
- le flux de gaz protégeant l'arc électrique TIG contient un mélange de 80% d'argon et 20% d'hélium (% en volume).
- le flux de gaz protégeant l'arc électrique TIG contient un mélange de 30% d'argon et 70% d'hélium (% en volume).

L'invention va maintenant être mieux comprise grâce à la description détaillée suivante faite en références aux Figures annexées parmi lesquelles :
- la Figure 2 schématise un dispositif de soudage hybride MIG-TIG ou MAG-TIG selon un mode de réalisation de l'invention,
- la Figure 3 schématise un sabot d'assemblage des torches MIG ou MAG et TIG selon un mode de réalisation de l'invention, et
- la Figure 4 illustre une pince pour torche MIG utilisée dans un mode de réalisation de l'invention.

La Figure 2 schématise un dispositif de soudage hybride MIG-TIG ou MAG-TIG, ci-après dénommé dispositif de soudage hybride, selon un mode de réalisation de l'invention.

Comme on le voit sur la Figure 2, le dispositif de soudage hybride MIG-TIG ou MAG-TIG comprend une torche 1 de soudage MIG ou MAG comprenant, en son extrémité située en regard des pièces à souder, un fil fusible métallique la. Le fil fusible la est orienté selon une première direction 1b.

De préférence, lorsque des pièces métalliques à souder sont positionnées en regard de la torche 1 de soudage MIG ou MAG, la première direction 1b est perpendiculaire à la surface supérieure desdites pièces. Dans le cas de soudage de pièces maintenues à plat, i. e. horizontalement, la première direction 1b forme donc un angle de l'ordre de 0° avec la verticale.

Le dispositif de soudage hybride comprend également une torche 2 de soudage TIG comprenant, en son extrémité située en regard des pièces à souder, une électrode non fusible 2a. L'extrémité 2c de l'électrode 2a est formée d'une pointe présentant un affûtage conique. Plus précisément, cet affûtage prend en général la forme d'un cône de révolution dont l'angle d'ouverture est compris entre 20 et 40°, de préférence de l'ordre de 30°.

L'électrode 2a est orientée selon une deuxième direction 2b, lesdites première et deuxième directions 1b et 2b étant sensiblement coplanaires et formant entre elles un angle α compris entre 5 et 40°. De préférence l'angle α est compris entre 10° et 30°, de préférence encore compris entre 15° et 25°, avantageusement entre 18 et 23°, et idéalement de l'ordre de 20°.

Préférentiellement, le plan contenant les première et deuxième direction 1b et 2b est perpendiculaire à la surface des pièces à souder.

Selon l'invention, le dispositif de soudage hybride comprend en outre un sabot 5 d'assemblage des torches 1 et 2 dans lequel celles-ci sont agencées. La torche 1 de soudage MIG ou MAG est agencée dans le sabot 5, lequel sabot 5 est apte à et conçu pour permettre un positionnement de la torche 2 de soudage TIG selon au moins deux positions prédéfinies par rapport à la torche 1 de soudage MIG ou MAG.

Ces au moins deux positions prédéfinies comprennent une première position dans laquelle l'extrémité 2c de l'électrode non fusible 2a se situe à une première distance D de la première direction 1b, et une deuxième position dans laquelle l'extrémité 2c de l'électrode non fusible 2a se situe à une deuxième distance D' de la première direction 1b, la deuxième distance D' étant supérieure à la première distance D. La Figure 2 illustre un mode de réalisation dans lequel la torche 2 de soudage TIG peut être agencée selon deux positions par rapport à la torche de soudage MIG ou MAG.

Comme illustré sur la Figure 2, les distances D et D' sont définies comme les distances séparant un premier point correspondant à la position de l'extrémité 2c de l'électrode non fusible 2a et un deuxième point résultant de la projection orthogonale du premier point sur l'axe défini par la direction 1b.

Dans le cadre de l'invention, la distance D est typiquement comprise entre 20 et 26 mm. Ces valeurs sont particulièrement avantageuses lorsque l'on souhaite souder des pièces métalliques en acier inoxydable. Idéalement, pour le soudage de pièces en acier inoxydable, la distance D est de l'ordre de 24 mm.

La distance D' est typiquement comprise entre 36 et 44 mm. Ces valeurs sont particulièrement avantageuses lorsque l'on souhaite souder des pièces métalliques en acier doux, i. e. en acier au carbone. Idéalement, pour le soudage de pièces en acier doux, la distance D' est de l'ordre de 40 mm.

Optionnellement, le dispositif de l'invention peut comprendre un sabot 5 autorisant des positions supplémentaires de la torche 2 TIG par rapport à la torche 1 MIG ou MAG. L'extrémité 2c de l'électrode non fusible 2a peut alors être positionnée à autant de distances supplémentaires D", D'"... que de positions supplémentaires permises par le sabot 5.

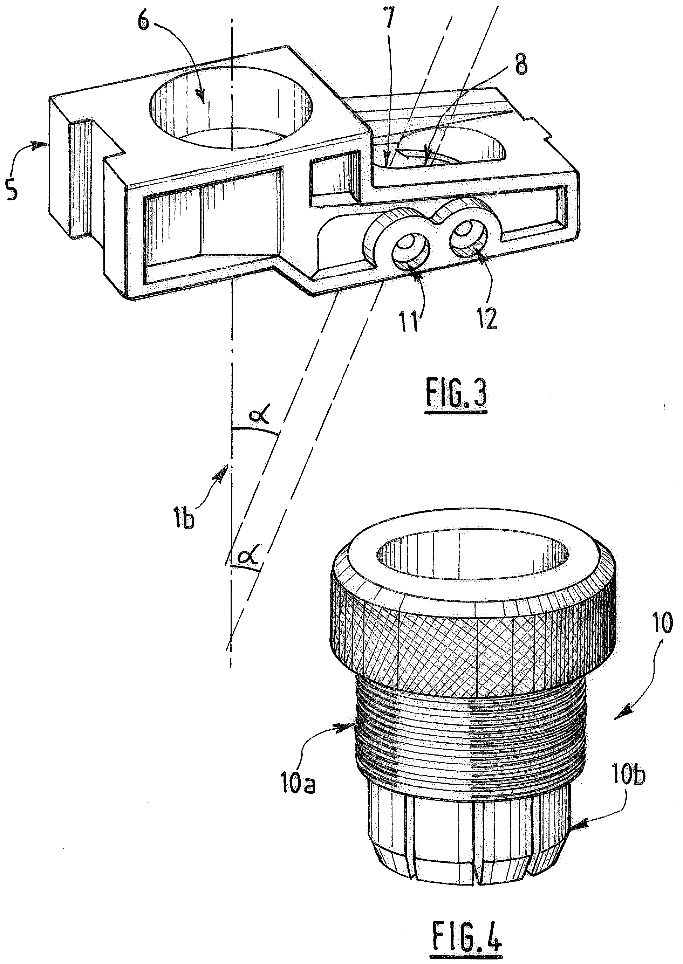

Le sabot 5 d'assemblage du dispositif de soudage hybride de l'invention est illustré sur la Figure 3, sans qu'une torche 1 de soudage MIG ou MAG et une torche 2 de soudage TIG y soit agencées.

Conformément à l'invention, le sabot 5 d'assemblage comprend un logement axial 6 traversant le sabot 5 sur toute son épaisseur selon la première direction 1b et débouchant en regard des pièces métalliques à souder. Ce logement axial 6 accueille la torche 1 de soudage MIG ou MAG. De préférence, le logement axial 6 est un passage ayant une section de forme cylindrique pratiqué dans l'épaisseur du sabot 5. Le logement axial 6 peut comprendre des variations des dimensions de son diamètre intérieur le long de la première direction 1b, c'est-à-dire des élargissements ou des rétrécissements de ce diamètre, ou bien être de diamètre intérieur constant le long de la première direction 1b. De manière optionnelle, le logement axial 6 peut comprendre, le long de tout ou partie de sa paroi intérieure, une portion comprenant un premier filetage. L'extrémité de la torche 1 MIG ou MAG munie du fil fusible la et d'une buse 30 de distribution du gaz de protection vient dépasser sous le sabot 5, c'est-à-dire qu'elle est positionnée entre le sabot 5 et la surface des pièces métalliques à souder située en regard du dispositif de soudage.

En outre, comme montré sur la Figure 2, le sabot s'assemblage 5 comprend des moyens 9 d'ajustement en translation de la position de la torche 1 de soudage MIG ou MAG le long de la première direction 1b. Selon un mode réalisation, ces moyens 9 d'ajustement en translation comprennent au moins une vis pouvant se déplacer en translation dans un trou oblong pratiqué dans une cale placée sur le côté du sabot 5. Ladite cale peut coulisser parallèlement à la première direction 1b. On ajuste de cette manière la longueur de cale dépassant sous le sabot 5. Par exemple, en réglant la longueur de cale dépassant sous le sabot 5 à 10 mm, en plaçant l'ensemble du dispositif sur une surface plane en s'assurant que la surface supérieure du sabot 5 lui est parallèle et en descendant la torche 1 jusqu'à ce qu'elle soit en contact avec cette surface plane, on s'assure que la longueur de torche dépassant sous le sabot 5 est de 10 mm.

Les moyens 9 permettent un ajustement précis de la partie de l'extrémité de la torche 1 MIG ou MAG qui dépasse du sabot 5. Il est ainsi possible de régler la distance entre la buse 30 équipant l'extrémité de la torche 1 MIG ou MAG et les pièces métalliques à souder, cette distance constituant un des paramètres du procédé de soudage opéré par le dispositif de l'invention.

Selon un mode particulier de réalisation de l'invention, comme illustré en Figure 2, le dispositif de soudage hybride de l'invention comprend en outre une pince 10 dans lequel est agencée la torche 1 de soudage MIG ou MAG. Cette pince 10 est elle-même agencée dans le logement axial 6 et sert de pièce d'adaptation pour agencer tout type de torche 1 de soudage MIG ou MAG dans le logement axial 6 du sabot d'assemblage 5.

Un mode de réalisation de la pince 10 est schématisé sur la Figure 4. Dans ce cas, la pince 10 est une pièce de révolution comprenant une portion 10a de forme cylindrique dont le diamètre extérieur correspond au diamètre intérieur du logement axial 6. Un deuxième filetage est réalisé sur la surface extérieure de la portion 10a de la pince 10, le pas de ce deuxième filetage étant adapté au pas du premier filetage réalisé sur tout ou partie de la paroi intérieure du logement axial 6 de manière à ce que la pince 10 puisse être vissée dans le logement axial 6. La pince 10 comprend également une portion 10b apte à et conçue pour enserrer et maintenir la torche 1 MIG ou MAG.

En outre, comme représenté sur la Figure 3, le sabot s'assemblage 5 comprend un premier logement latéral 7 traversant ledit sabot 5 dans lequel est agencée la torche 2 de soudage TIG lorsqu'elle est positionnée dans la première position.

Le sabot s'assemblage 5 comprend également un deuxième logement latéral 8 traversant le sabot 5 dans lequel est agencée la torche 2 de soudage TIG lorsqu'elle est positionnée dans la deuxième position.

Plus précisément, les logement latéraux 7 et 8 sont des passages traversant le sabot 5 sur toute son épaisseur et débouchant en regard des pièces métalliques à souder. De préférence, les logements latéraux 7 et 8 sont des passages dont la section est de forme cylindrique pratiqués dans l'épaisseur du sabot 5. Les axes centraux de ces passages, représentés par les lignes discontinues (---) sur la Figure, 3 forment conformément à l'invention un angle α avec l'axe du logement axial 6 coïncidant avec la première direction 1b, représentée par la ligne continue (_).

Les logements latéraux 7 et 8 peuvent comprendre des variations des dimensions de leurs diamètres intérieurs le long de leurs axes centraux, c'est-à-dire des élargissements ou des rétrécissements de ces diamètres, ou bien avoir des diamètres intérieurs constants le long de leurs axes centraux. De manière optionnelle, le logement latéral 7 ou le logement latéral 8 peut comprendre un rétrécissement de son diamètre intérieur formant un épaulement sur lequel vient s'appuyer au moins une partie de la torche 2 de soudage TIG.

L'extrémité de la torche 2 TIG munie de l'électrode non fusible 2a et d'une buse 40 de distribution du gaz de protection vient elle aussi dépasser sous le sabot 5, c'est-à-dire qu'elle est positionnée entre le sabot 5 et la surface des pièces métalliques à souder située en regard du dispositif de soudage.

Le sabot 5 comprend des moyens de fixation 11, 13 ou 12, 13 de la torche 2 de soudage TIG dans les premier ou deuxième logements latéraux 7, 8. Selon un mode de réalisation, illustré sur les Figures 2 et 3, les moyens de fixation comprennent des orifices latéraux 11 ou 12 dans lesquels peut être agencé une vis ou un pion fileté 13. Le pion ou la vis 13 est placé dans l'orifice 11 du sabot 5 lorsque la torche 2 TIG est positionnée dans la première position et dans l'orifice 12 du sabot 5 lorsque la torche 2 TIG est positionnée dans la deuxième position. Le pion ou la vis 13 traverse l'épaisseur du sabot 5 dans laquelle sont pratiqués les orifices 11 et 12 et vient maintenir la torche 2 TIG.

De manière optionnelle, le dispositif de l'invention comprend un jeu d'entretoises permettant à l'utilisateur d'adapter tout type de torches TIG ou de torches MIG ou MAG dans les logements 6, 7 ou 8 du sabot 5.

Pour une meilleure robustesse mécanique du dispositif de l'invention, le sabot 5 est avantageusement formé d'un bloc, en d'autres termes le sabot 5 est formé d'un seul bloc et non d'un assemblage de pièces. Les logements 6, 7 et 8 sont pratiqué par usinage ou perçage dans ce bloc. De préférence, le sabot 5 est en aluminium.

Selon un autre aspect, l'invention concerne également une installation de soudage hybride MIG-TIG ou MAG-TIG comprenant une torche 1 de soudage MIG ou MAG et une torche 2 de soudage TIG reliées électriquement à au moins un générateur de courant. Les torches 1 et 2 sont également reliées fluidiquement à au moins une source de gaz servant à alimenter les buses 30 et 40 en gaz de protection.

En outre, l'installation de soudage hybride MIG-TIG ou MAG-TIG comprend une poutre mobile sur laquelle est agencé le dispositif de soudage hybride selon l'invention. Ledit dispositif de soudage hybride peut être lui-même mobile ou non sur la poutre. L'installation comporte également une commande numérique apte à et conçue pour contrôler le déplacement de la poutre mobile et/ou du dispositif de soudage hybride sur ladite poutre.

Par ailleurs, l'invention concerne également un procédé de soudage hybride MIG-TIG ou MAG-TIG de pièces métalliques mettant en oeuvre le dispositif et l'installation de l'invention. Le soudage de pièces métallique est opéré par déplacement relatif d'un dispositif de soudage hybride MIG-TIG ou MAG-TIG selon l'invention par rapport aux pièces métalliques à souder selon une direction dite de soudage et comprend les étapes de :
a) générer un bain de soudure par fusion du métal constitutif des pièces métalliques à souder au moyen d'un arc électrique MIG ou MAG établi entre le fil fusible la de la torche 1 de soudage MIG ou MAG-TIG et les pièces métalliques à souder,
b) amener un arc électrique TIG établi entre l'électrode non fusible 2a de la torche 2 de soudage TIG et les pièces métalliques à souder sur au moins une partie du bain de soudure généré à l'étape a), et
c) obtenir des pièces métalliques soudées par re-solidification du métal constitutif de celles-ci.

Conformément à l'invention, l'extrémité 2c de l'électrode non fusible 2a est positionnée à l'arrière de la première direction 1b du fil fusible la selon la direction de soudage et à une distance D ou D' de ladite première direction 1b choisie selon la nature du métal constitutif des pièces métalliques à souder. Le choix de la distance séparant l'extrémité 2c de l'électrode non fusible 2a de la première direction 1b est fonction des caractéristiques physiques du bain de soudure généré, notamment viscosité et conductivité thermique, qui varient selon la nature du matériau soudé.

L'application principale de la présente invention est un procédé de soudage de pièces métalliques en alliages ferreux, en aluminium ou an alliage d'aluminium, de préférence en acier inoxydable ou en acier au carbone.

Lorsque les pièces métalliques à souder sont en acier inoxydable, l'extrémité 2c de l'électrode non fusible 2a se situe de préférence à la distance D de la première direction 1b. Lorsque les pièces métalliques à souder sont en acier au carbone, l'extrémité 2c de l'électrode non fusible (2a) se situe de préférence à une distance D' de la première direction 1b.

Au cours de l'opération de soudage, l'arc électrique MIG ou MAG-TIG et l'arc électrique TIG sont protégés par des flux de gaz de protection délivrés respectivement par les buses 30 et 40.

Avantageusement, l'arc électrique MIG ou MAG est protégé par un flux de gaz contenant majoritairement au moins un composé inerte choisi parmi l'hélium et l'argon, de préférence au moins 80% (% en volume), et optionnellement un composé minoritaire à caractère chimique oxydant choisi parmi CO₂ et O₂.

Par exemple, pour le soudage des aciers inoxydables, on protège de préférence l'arc électrique MIG ou MAG par un flux de gaz contenant environ 98% d'argon et 2% de CO₂ (% en volume). Pour le soudage des aciers au carbone, on utilise de préférence un flux de gaz contenant un proportion plus importante de composé oxydant, par exemple un flux de gaz contenant environ 92% d'argon et 8% de CO₂ ou contenant 82% d'argon et 18% de CO₂ (% en volume).

L'arc électrique TIG est protégé par un flux de gaz contenant essentiellement de l'argon, de préférence au moins 99.9% (% en volume) ou un mélange d'hélium et d'argon, par exemple un flux de gaz contenant 80% d'argon et 20% d'hélium ou contenant 30% d'argon et 70% d'hélium, ou encore un mélange contenant au moins 95 % d'argon et de l'hydrogène (% en volume).

Comme mentionné précédemment, on utilise avantageusement la combinaison d'un arc TIG avec un arc MIG ou MAG pour lutter contre le phénomène de « *humping* » apparaissant aux grandes vitesses de soudage. En fait, la proximité entre les deux arcs et leur succession rapide sur une même zone du joint font que cette même zone de joint est frappée successivement par d'abord l'arc MIG ou MAG, puis ensuite par l'arc TIG alors que le métal de cette zone de joint est encore liquide, c'est-à-dire en fusion après passage de l'arc MIG ou MAG.

Il s'ensuit que l'arc TIG vient exercer son action sur le bain de soudage formé par l'arc MIGou MAG alors qu'il est encore liquide. Le bain de soudage va alors profiter du flux de chaleur généré par l'arc TIG pour ne pas se solidifier mais aussi de la pression exercée par cet arc sur la bosse de métal fondu formée à l'extrémité arrière de ce bain, ce qui permet d'obtenir un cordon de soudure sans ou quasi sans défauts de type bosselage.

Afin de démontrer l'efficacité du dispositif de soudage hybride MIG-TIG ou MAG-TIG de l'invention pour souder sans défaut et à grande vitesse des pièces métalliques, en particulier des pièces de faible épaisseur, des essais de soudage hybride MIG-TIG ont été menés sur des tôles d'une épaisseur de 1.5 mm.

Un premier essai de soudage a été réalisé sur des pièces en acier inoxydable à plat. Les paramètres de soudage étaient les suivants :
- le gaz de protection MIG contenaient 98% d'argon et 2% de CO₂ (% en volume), correspondant au mélange ARCAL 12 commercialisé par AIR LIQUIDE,
- le gaz de protection TIG contenait de l'argon, correspondant au mélange ARCAL 1 (degré de pureté de l'argon de l'ordre de 99.998% en volume) commercialisé par AIR LIQUIDE,
- la distance D séparant l'extrémité 2c de l'électrode 2a TIG de la première direction 1b était de 24 mm,
- l'angle α formé entre la première direction 1b du fil fusible la de la torche MIG et la deuxième direction 2b de l'électrode non fusible 2a de la torche TIG était de 20°,
- la première direction 1b était perpendiculaire à la surface des pièces à souder, i. e. formait un angle de 0° avec la verticale,
- l'angle d'affûtage de l'électrode TIG était de 30°,
- la torche TIG était alimentée par un courant lisse d'une intensité de 250A,
- la distance entre l'extrémité de l'électrode 2c et les pièces à souder était de 3mm,
- la torche MIG était alimentée par un courant lisse d'une intensité 272 A, la tension d'arc étant de 27 V et la distance entre la buse de la torche MIG et la pièce étant de 13 mm,
- la vitesse de dévidage du fil fusible de la torche MIG était de 13.2 m/min.

Lors de ces essais, une vitesse de soudage élevée, de l'ordre de 3.2 m/min, a pu être utilisée, sans que les cordons obtenus ne présentent de défaut de *« humping ».* Les cordons obtenus possédaient de bonnes caractéristiques métallurgiques.

Un deuxième essai de soudage a été réalisé sur des pièces sur acier carbone à plat d'une épaisseur de 1.5 mm. Les paramètres de soudage étaient les suivants :
- le gaz de protection MIG contenaient 92% d'argon et 8% de CO₂ (% en volume), correspondant au mélange ARCAL 21 commercialisé par AIR LIQUIDE,
- le gaz de protection TIG contenait de l'argon, correspondant au mélange ARCAL 1 (degré de pureté de l'argon de l'ordre de 99.998% en volume) commercialisé par AIR LIQUIDE,
- la distance D séparant l'extrémité 2c de l'électrode 2a TIG de la première direction 1b était de 40 mm,
- l'angle α formé entre la première direction 1b du fil fusible la de la torche MIG et la deuxième direction 2b de l'électrode non fusible 2a de la torche TIG était de 20°,
- la première direction 1b était perpendiculaire à la surface des pièces à souder, i. e. formait un angle de 0° avec la verticale,
- l'angle d'affûtage de l'électrode TIG était de 30°,
- la torche TIG était alimentée par un courant lisse d'une intensité de 350A,
- la distance entre l'extrémité de l'électrode 2c et les pièces à souder était de 3mm,
- la torche MIG était alimentée par un courant pulsé d'une intensité 314 A, la tension d'arc étant de 32.4 V et la distance entre la buse de la torche MIG et la pièce étant de 13 mm,
- la vitesse de dévidage du fil fusible de la torche MIG était de 18.5 m/min.

Lors de ces essais, une vitesse de soudage élevée, de l'ordre de 2.8 m/min, a pu être utilisée. Les cordons obtenus ne présentaient pas de défaut de *« humping »* et possédaient de bonnes caractéristiques métallurgiques.

Les résultats de ces essais confirment l'intérêt du dispositif de soudage hybride MIG-TIG de l'invention qui permet d'améliorer les performances de soudage MIG et de souder des pièces métallique à grande vitesse sans que les cordons ne présente de défaut du type bosselage. En outre, il est possible, avec un seul dispositif de souder différents types de matériaux pour lesquels les distances entre l'extrémité de l'électrode TIG et la direction du fil MIG doivent être différentes. Le dispositif réduit le nombre d'ajustements nécessaires avant d'opérer le soudage des pièces avec les dispositifs de soudage hybride de l'art antérieur puisque les torches sont assemblées mécaniquement par un sabot autorisant des positions relatives prédéterminées des deux torches TIG et MIG ou MAG. Il est ainsi possible, avec un même dispositif, de souder différents types de matériaux. En outre, le dispositif ne complexifie pas de manière excessive l'installation de soudage, ne nécessite pas un apport supplémentaire d'énergie trop important.

L'invention est particulièrement avantageuse pour améliorer la productivité d'un procédé de soudage de pièces métalliques ayant une épaisseur inférieure à 3 mm, de préférence inférieure à 2 mm, puisque ces épaisseurs conduisent à des vitesses de soudage importantes pour lesquelles le défaut de « *humping* » est le plus susceptible de se produire.

## Revendications

1. Dispositif de soudage hybride MIG-TIG ou MAG-TIG comprenant une torche (1) de soudage MIG ou MAG comprenant un fil fusible (1a) orienté selon une première direction (1b), associée á une torche (2) de soudage TIG comprenant une électrode non fusible (2a) orientée selon une deuxième direction (2b), lesdites première et deuxième directions (1b, 2b) étant sensiblement coplanaires et formant entre elles un angle (α) compris entre 5 et 40°,
**caractérisé en ce qu'**il comprend en outre un sabot (5) d'assemblage des torches (1, 2) apte à et conçu pour permettre un positionnement de la torche (2) de soudage TIG selon au moins deux positions prédéfinies par rapport à la torche (1) de soudage MIG ou MAG comprenant:
- une première position dans laquelle l'extrémité (2c) de l'électrode non fusible (2a) se situe à une première distance (D) de la première direction (1b),
- au moins une deuxième position dans laquelle l'extrémité (2c) de l'électrode non fusible (2a) se situe à une deuxième distance (D') de la première direction (1b), la deuxième distance (D') étant supérieure à la première distance (D),
- un logement axial (6) traversant le sabot (5) selon la première direction (1b), dans lequel est agencée la torche (1) de soudage MIG ou MAG,
- un premier logement latéral (7) traversant le sabot (5) dans lequel est agencée la torche (2) de soudage TIG lorsqu'elle est positionnée dans la première position, et
- au moins un deuxième logement latéral (8) traversant le sabot (5) dans lequel est agencee la torche (2) de soudage TIG lorsqu'elle est positionnée dans la deuxième position.

2. Dispositif selon l'une des revendications précédentes, **caractérisé en ce que** la première distance (D) est comprise entre 20 et 26 mm.

3. Dispositif selon l'une des revendications précédentes, **caractérisé en ce que** la deuxième distance (D') est comprise entre 36 et 44 mm.

4. Dispositif selon l'une des revendications précédentes, **caractérisé en ce que** lesdites première et seconde directions (1b, 2b) forment entre elles un angle (α) compris entre 10° et 30°.

5. Dispositif selon l'une des revendications précédentes, **caractérisé en ce que** le sabot (5) comprend en outre des moyens de fixation (11, 13) ou (12, 13) pour maintenir la torche (2) de soudage TIG dans les premier ou deuxième logements latéraux (7, 8).

6. Dispositif selon l'une des revendications précédentes, **caractérisé en ce que** le sabot (5) comprend en outre des moyens (9) d'ajustement en translation de la position de la torche (1) de soudage MIG ou MAG le long de la première direction (1b).

7. Dispositif selon l'une des revendications précédentes, **caractérisé en ce qu'**il comprend en outre une pince (10) agencée dans le logement axial (6) et dans laquelle est insérée la torche (1) de soudage MIG ou MAG.

8. Dispositif selon l'une des revendications précédentes, caractérisé en que le sabot (5) est formé d'un bloc.

9. Installation de soudage hybride MIG-TIG ou MAG-TIG comprenant une torche (1) de soudage MIG ou MAG et une torche (2) de soudage TIG reliées électriquement à au moins un générateur de courant et reliées fluidiquement à au moins une source de gaz, **caractérisée en ce qu'**elle comprend en outre une poutre mobile sur laquelle est agence un dispositif de soudage hybride MIG-TIG selon l'une des revendications précédentes, ledit dispositif de soudage hybride MIG-TIG ou MAG-TIG étant mobile ou non, et une commande numérique apte à et conçue pour contrôler le déplacement de la poutre mobile et/ou du dispositif de soudage hybride MIG-TIG ou MAG-TIG.

10. Procédé de soudage hybride MIG-TIG ou MAG-TIG de pièces métalliques (30) **caractérisé en ce qu'**il met en oeuvre un dispositif de soudage hybride MIG-TIG ou MAG-TIG selon l'une des revendications 1 à 8 et dans lequel, pendant le soudage :
- on établit un arc électrique MIG ou MAG entre le fil fusible (1a) de la torche (1) de soudage MIG ou MAG et les pièces métalliques à souder de manière à générer un bain de soudure, ledit arc électrique MIG ou MAG étant protégé par un flux de gaz contenant majoritairement au moins un composé inerte choisi parmi l'hélium et l'argon, et
- on établit un arc electrique TIG entre l'électrode non fusible (2a) de la torche (2) de soudage TIG et les pièces métalliques à souder sur au moins une partie dudit bain de soudure, ledit arc électrique TIG étant protégé par un flux de gaz contenant essentiellement de l'argon ou un mélange d'helium et d'argon.

11. Procédé selon la revendication 10, **caractérisé en ce que** l'arc électrique MIG ou MAG est protégé par un flux de gaz contenant au moins 80% d'au moins un composé inerte choisi parmi l'hélium et l'argon (% en volume).

12. Procédé selon l'une des revendications 10 ou 11 **caractérisé en ce que** le flux de gaz protégeant l'arc électrique MIG ou MAG contient en outre un composé minoritaire à caractère chimique oxydant choisi parmi CO₂ et O₂.

13. Procédé selon l'une des revendications 10 à 12, **caractérisé en ce que** lorsque les pièces soudées sont en acier inoxydable, le flux de gaz protégeant l'arc électrique MIG ou MAG contient environ 98% d'argon et 2% de CO₂ (% en volume).

14. Procédé selon l'une des revendications 10 à 12, **caractérisé en ce que** lorsque les pièces soudées sont formées d'acier au carbone, le flux de gaz 3 protégeant l'arc électrique MIG ou MAG contient environ 92% d'argon et 8% de CO₂ ou 82% d'argon et 18% de CO₂ (% en volume).

15. Procédé selon la revendication 10, **caractérisé en ce que** le flux de gaz protégeant l'arc électrique TIG contient essentiellement de l'argon, de preference au moins 99.9% d'argon (% en volume).

16. Procédé selon l'une des revendications 10 ou 15, **caractérisé en ce que** le flux de gaz protégeant l'arc electrique TIG contient au moins 95% d'argon et de l'hydrogene (% en volume).

17. Procédé selon l'une des revendications 10 ou 15, **caractérisé en ce que** le flux de gaz protégeant l'arc électrique TIG contient un mélange d'hélium et d'argon.

18. Procédé selon l'une des revendications 10, 15 ou 17, **caractérisé en ce que** le flux de gaz protégeant l'arc électrique TIG contient:
- soit un mélange de 80% d'argon et 20% d'hélium (% en volume),
- soit un mélange de 30% d'argon et 70% d'hélium (% en volume).

## Patentansprüche

1. Hybrid-MIG-TIG- oder MAG-TIG-Schweißvorrichtung, umfassend einen MIG- oder MAG-Schweißbrenner (1), der einen in einer ersten Richtung (1b) ausgerichteten abschmelzenden Schweißdraht (1a) umfasst, der einem WIG-Schweißbrenner (2) zugeordnet ist, der eine nicht schmelzbare Elektrode (2a) umfasst, die in einer zweiten Richtung (2b) ausgerichtet ist, wobei die erste und die zweite Richtung (1b, 2b) im Wesentlichen koplanar sind und zwischen ihnen einen Winkel (α) zwischen 5 und 40 ° bilden,
**dadurch gekennzeichnet, dass** sie ferner einen Brenner (1, 2) Montageschuh (5) umfasst, der dazu geeignet und ausgelegt ist, den WIG Schweißbrenner (2) in mindestens zwei vordefinierten Positionen in Bezug auf den MIG- oder MAG-Schweißbrenner (1) zu positionieren, und der umfasst:
- eine erste Position, in der sich das Ende (2c) der nicht schmelzbaren Elektrode (2a) in einem ersten Abstand (D) von der ersten Richtung (1b) befindet,
- mindestens eine zweite Position, in der das Ende (2c) der nicht schmelzbaren Elektrode (2a) sich in einem zweiten Abstand (D') von der ersten Richtung (1b) befindet, wobei der zweite Abstand (D') größer als der erste Abstand (D) ist,
- eine axiale Aufnahme (6), die in der ersten Richtung (1b) durch den Schuh (5) verläuft, und in der der MIG- oder MAG-Schweißbrenner (1) angeordnet ist,
- eine erste seitliche Aufnahme (7), die durch den Schuh (5) verläuft und in der der WIG-Schweißbrenner (2) angeordnet ist, wenn er in der ersten Position positioniert ist, und
- mindestens eine zweite seitliche Aufnahme (8), die durch den Schuh (5) verläuft und in der der WIG-Schweißbrenner (2) angeordnet ist, wenn er in der zweiten Position positioniert ist.

2. Vorrichtung nach einem der vorhergehenden Ansprüche, **dadurch gekennzeichnet, dass** der erste Abstand (D) zwischen 20 und 26 mm beträgt.

3. Vorrichtung nach einem der vorhergehenden Ansprüche, **dadurch gekennzeichnet, dass** der zweite Abstand (D') zwischen 36 und 44 mm beträgt.

4. Vorrichtung nach einem der vorhergehenden Ansprüche, **dadurch gekennzeichnet, dass** die erste und die zweite Richtung (1b, 2b) zwischen sich einen Winkel (α) zwischen 10 ° und 30 ° bilden.

5. Vorrichtung nach einem der vorhergehenden Ansprüche, **dadurch gekennzeichnet, dass** der Schuh (5) ferner Befestigungsmittel (11, 13) oder (12, 13) zum Halten des WIG-Schweißbrenners (2) in der ersten oder zweiten seitlichen Aufnahme aufweist (7, 8).

6. Vorrichtung nach einem der vorhergehenden Ansprüche, **dadurch gekennzeichnet, dass** der Schuh (5) ferner eine Einrichtung (9) aufweist, um die Position des MIG- oder MAG-Schweißbrenners (1) entlang der ersten Richtung (1b) translatorisch einzustellen.

7. Vorrichtung nach einem der vorhergehenden Ansprüche, **dadurch gekennzeichnet, dass** sie ferner eine im axialen Gehäuse (6) angeordnete Klammer (10) umfasst, in die der MIG- oder MAG-Schweißbrenner (1) eingesetzt ist.

8. Vorrichtung nach einem der vorhergehenden Ansprüche, **dadurch gekennzeichnet, dass** der Schuh (5) aus einem Block gebildet ist.

9. Hybrid-MIG-TIG- oder MAG-TIG-Schweißanordnung, umfassend einen MIG- oder MAG-Schweißbrenner (1) und einen WIG-Schweißbrenner (2), die elektrisch mit mindestens einem Stromgenerator verbunden sind und mit mindestens einer Gasquelle in Fluidverbindung stehen, **dadurch gekennzeichnet, dass** sie ferner einen beweglichen Träger, auf dem eine Hybrid-MIG-TIG-Schweißvorrichtung nach einem der vorhergehenden Ansprüche angeordnet ist, wobei die MIG-TIG oder MAG-TIG Hybridschweißvorrichtung beweglich ist oder nicht, sowie eine numerische Steuerung umfasst, die geeignet und ausgelegt ist zur Steuerung der Verschiebung des mobilen Trägers und/oder der MIG-TIG- oder MAG-TIG-Hybridschweivorrichtung.

10. Verfahren zum Hybrid-MIG-TIG- oder MAG-TIG-Schweißen von Metallteilen (30), **dadurch gekennzeichnet, dass** eine Hybrid-MIG-TIG- oder MAG-TIG-Schweißvorrichtung nach einem der Ansprüche 1 bis 8 verwendet wird und beim Schweißen:
- zwischen dem abschmelzenden Schweißdraht (1a) des MIG- oder MAG-Schweißbrenners (1) und den zu verschweißenden Metallteilen ein MIG- oder MAG-Lichtbogen erzeugt wird, um ein Lötbad zu erzeugen, wobei der MIG- oder MAG-Lichtbogen durch einen Gasstrom geschützt wird, der hauptsächlich mindestens eine inerte Verbindung enthält, ausgewählt aus Helium und Argon, und
- ein WIG-Lichtbogen zwischen der nicht-schmelzenden Elektrode (2a) des WIG-Schweißbrenners (2) und den zu verschweißenden Metallteilen an mindestens einem Teil des Lötbads erzeugt wird, wobei der WIG-Lichtbogen durch einen Gasstrom geschützt wird, der hauptsächlich Argon oder eine Mischung aus Helium und Argon enthält.

11. Verfahren nach Anspruch 10, **dadurch gekennzeichnet, dass** der elektrische MIG- oder MAG-Lichtbogen durch einen Gasstrom geschützt wird, der mindestens 80% mindestens einer inerten Verbindung enthält, die aus Helium und Argon (Vol .-%) ausgewählt ist.

12. Verfahren nach einem der Ansprüche 10 oder 11, **dadurch gekennzeichnet, dass** der Gasstrom, der den elektrischen MIG- oder MAG-Lichtbogen schützt, ferner zum geringeren Teil eine chemisch oxidierende Komponente enthält, die aus CO₂ und O₂ ausgewählt ist.

13. Verfahren nach einem der Ansprüche 10 bis 12, **dadurch gekennzeichnet, dass**, wenn die geschweißten Teile aus Edelstahl bestehen, der den MIG- oder MAG-Lichtbogen schützende Gasstrom etwa 98% Argon und 2% CO₂ (Vol .-%) enthält.

14. Verfahren nach einem der Ansprüche 10 bis 12, **dadurch gekennzeichnet, dass**, wenn die geschweißten Teile aus Kohlenstoffstahl gebildet werden, der den MIG- oder MAG-Lichtbogen schützende Gasstrom etwa 92% Argon und 8% CO₂ oder 82% Argon und 18% CO₂ (Vol.-%) enthält.

15. Verfahren nach Anspruch 10, **dadurch gekennzeichnet, dass** der den TIG-Lichtbogen schützende Gasstrom im Wesentlichen Argon enthält, vorzugsweise mindestens 99,9% Argon (Vol .-%).

16. Verfahren nach einem der Ansprüche 10 oder 15, **dadurch gekennzeichnet, dass** der den WIG-Lichtbogen schützende Gasstrom mindestens 95% Argon und Wasserstoff (Vol .-%) enthält.

17. Verfahren nach einem der Ansprüche 10 oder 15, **dadurch gekennzeichnet, dass** der den WIG-Lichtbogen schützende Gasstrom eine Mischung aus Helium und Argon enthält.

18. Verfahren nach einem der Ansprüche 10, 15 oder 17, **dadurch gekennzeichnet, dass** der den WIG-Lichtbogen schützende Gasstrom enthält:
- eine Mischung aus 80% Argon und 20% Helium (Vol .-%),
- oder eine Mischung aus 30% Argon und 70% Helium (Vol .-%).

## Claims

1. A hybrid MIG-TIG or MAG-TIG welding device comprising a MIG or MAG welding torch (1) comprising a consumable wire (1a) oriented in a first direction (1b), associated with a TIG welding torch (2) that comprises a non-consumable electrode (2a) oriented in a second direction (2b), said first and second directions (1b, 2b) being substantially coplanar and forming between them an angle (α) of between 5 and 40 °,
**characterized in that** it further comprises a torch (1,2) assembly shoe (5) adapted to and designed to allow positioning of the TIG welding torch (2) in at least two predefined positions with respect to the MIG or MAG welding torch (1) comprising:
- a first position in which the end (2c) of the non-consumable electrode (2a) is at a first distance (D) from the first direction (1b),
- at least a second position in which the end (2c) of the non-consumable electrode (2a) is at a second distance (D') from the first direction (1b), the second distance (D') being greater than the first distance (D),
- an axial housing (6) passing through the shoe (5) in the first direction (1b), in which the MIG or MAG welding torch (1) is arranged,
- a first lateral housing (7) passing through the shoe (5) in which the TIG welding torch (2) is arranged when it is positioned in the first position, and
- at least a second lateral housing (8) passing through the shoe (5) in which the TIG welding torch (2) is arranged when it is positioned in the second position.

2. Device according to one of the preceding claims, **characterized in that** the first distance (D) is between 20 and 26 mm.

3. Device according to one of the preceding claims, **characterized in that** the second distance (D') is between 36 and 44 mm.

4. Device according to one of the preceding claims, **characterized in that** said first and second directions (1b, 2b) form between them an angle (α) between 10° and 30°.

5. Device according to one of the preceding claims, **characterized in that** the shoe (5) further comprises fixing means (11, 13) or (12, 13) for holding the TIG welding torch (2) in the first or second lateral housing (7, 8).

6. Device according to one of the preceding claims, **characterized in that** the shoe (5) further comprises means (9) for adjusting in translation the position of the MIG or MAG welding torch (1) along the first direction (1b).

7. Device according to one of the preceding claims, **characterized in that** it further comprises a clamp (10) arranged in the axial housing (6) and wherein is inserted in the MIG or MAG welding torch (1).

8. Device according to one of the preceding claims, **characterized in that** the shoe (5) is formed of a block.

9. A hybrid MIG-TIG or MAG-TIG welding system comprising a MIG or MAG welding torch (1) and a TIG welding torch (2) electrically connected to at least one current generator and fluidly connected to at least one source of gas, **characterized in that** it further comprises a movable beam on which is arranged a hybrid MIG-TIG welding device according to one of the preceding claims, said hybrid welding device MIG-TIG or MAG-TIG being movable or not, and a numerical control adapted to and designed to control the displacement of the mobile beam and/or the hybrid MIG-TIG or MAG-TIG welding device.

10. A method of hybrid MIG-TIG or MAG-TIG welding of metal parts (30) **characterized in that** it implements a hybrid MIG-TIG or MAG-TIG welding device according to one of claims 1 to 8 and in which, during the welding:
- a MIG or MAG electric arc is established between the consumable wire (1a) of the MIG or MAG welding torch (1) and the metal parts to be welded so as to generate a solder bath, said MIG or MAG electric arc being protected by a stream of gas containing mainly at least one inert compound selected from helium and argon, and
- a TIG electric arc is established between the non-consumable electrode (2a) of the TIG welding torch (2) and the metal parts to be welded on at least a part of said solder bath, said TIG electric arc being protected by a stream of gas containing mainly argon or a mixture of helium and argon.

11. The method of claim 10, **characterized in that** the MIG or MAG electric arc is protected by a gas stream containing at least 80% of at least one inert compound selected from helium and argon (% by volume).

12. Method according to one of claims 10 or 11, **characterized in that** the gas stream protecting the electric arc MIG or MAG further contains a minority compound with an oxidizing chemical chosen from CO₂ and O₂.

13. Method according to one of claims 10 to 12, **characterized in that** when the welded parts are stainless steel, the gas stream protecting the MIG or MAG electric arc contains about 98% argon and 2% CO₂ (% by volume).

14. Method according to one of claims 10 to 12, **characterized in that** when the welded parts are formed of carbon steel, the stream of gas protecting the electric arc MIG or MAG contains about 92% argon and 8% CO₂ or 82% argon and 18% CO₂ (% by volume).

15. The method of claim 10, **characterized in that** the gas stream protecting the electric arc TIG essentially contains argon, preferably at least 99.9% argon (% by volume).

16. Method according to one of claims 10 or 15, **characterized in that** the gas stream protecting the TIG electric arc contains at least 95% argon and hydrogen (% by volume).

17. Method according to one of claims 10 or 15, **characterized in that** the gas stream protecting the TIG electric arc contains a mixture of helium and argon.

18. Method according to one of claims 10, 15 or 17, **characterized in that** the gas stream protecting the TIG electric arc contains:
- a mixture of 80% argon and 20% helium (% by volume),
- or a mixture of 30% argon and 70% helium (% by volume).
